# EUROPEAN PATENT APPLICATION

(11) **EP 2 320 068 A1**
(43) Date of publication of application: **11.05.2011**
(21) Application number: 09175367.3
(22) Date of filing: 09.11.2009
(51) Int. Cl.: F03B 13/18, F03B 13/20

(54) **Device for converting wave energy into electrical energy**

(71) Applicant: New Ecology V.O.F., 1441 MK Purmerend (NL)
(72) Inventor: Oort, Dirk, 1441 MK, Purmerend (NL); Nowak, John Patrick, 1645 RL, Ursem (NL)
(74) Representative: 't Jong, Bastiaan Jacob

(57) **Abstract**

The invention relates to a device for converting wave energy into electrical energy, the device comprising:
- a vertical guide;
- a flotation device movable along the vertical guide between a top position and a bottom position;
- a buoyancy control device arranged at the bottom end of the vertical guide for maintaining a constant depth of the bottom end of the guide; and
- a conversion device for converting the movement of the floatation device along vertical guide into electrical energy.

The invention also relates to a combination of a number of devices and buoys.

## Description

The invention relates to a device for converting wave energy into electrical energy.

The waves of oceans and seas contain a shear unlimited source of energy. A plurality of solutions are known from the prior art to convert the energy of the waves into electrical power.

Known devices comprise a flotation device floating on the waves and some kind of transmission to convert the up and down movement of the floatation device into for example a rotary motion for driving a generator. All the known devices which are moving along the vertical axis need a stationary base, like the bottom of the ocean or a jetty extending into the sea in order to convert the wave energy. Using anchors attached in the bottom of the ocean causes undesired side effects. By arranging an anchor in the ocean's bottom the local sea life is disturbed and possibly damaged. Compared to systems that need a heavy vertical anchoring system to prevent the vertical guide from moving, this invention requires only a small anchoring system to maintain the horizontal position of a grid of wave energy converters. If the system can't be hooked-up to an existing infrastructure (e.g. windmills), a small artificial reef will be installed and used for anchoring. If abandonment or relocation of a grid of energy converters is required, the artificial reef will be already adapted by nature and stay behind without a negative ecological impact to the environment.

Furthermore a static anchor cannot always be arranged at the bottom of the ocean or the sea. The water depth can vary substantially due to high and low tide. Accordingly, a static anchor at great depths results in high costs.

Anchoring a wave energy converting device by a structure from land, like a jetty, can also be undesired because of for example the easy accessibility of non-essential people, the lacking of water with enough depth and undercurrents. Also the esthetic appearance of such devices near the shore is undesired by the destruction of the landscape and skyline. Note that in many countries the owner of the installation is responsible if something happens with trespassers.

It is thus an object of the invention to provide a device according to the preamble which can be arranged (anywhere) on the ocean and which is reliable and robust.

This object is achieved with a device according to the invention, which device comprised:
- a vertical guide;
- a flotation device movable along the vertical guide between a top position and a bottom position;
- a buoyancy control device arranged at the bottom end of the vertical guide for maintaining a constant depth of the bottom end of the guide; and
- a conversion device for converting the movement of the floatation device along vertical guide into electrical energy.

The buoyancy control device enables the vertical guide to keep a constant depth to the average sea level. The flotation device is floating on the waves and moves up and down relative to the stationery vertical guide. This relative movement can easily be converted to electrical power.

In a preferred embodiment of the device according to the invention the conversion device is a linear generator. A linear generator has a minimal amount of moving parts, providing a robust conversion device for generating electric power.

Preferably the linear generator comprises magnets arranged in the vertical guide and electrical coils arranged in the flotation device. This results in a device, in which the only moving part is the flotation device moving up and down along the vertical guide. The relative movement between the magnets and the electrical coils will generate a current in the coils.

It is known that at a depth of about three times the wave height below the trough (lowest point of the wave), there is no more influence of the waves at the surface of the ocean. So, when the buoyancy device is at this depth, a maximum stability for the vertical guide can be achieved, while keeping the dimensions of the device within limits. In a preferred embodiment of the device according to the invention the distance between the trough and the buoyancy control device will be at least two times, preferably three times the wave height or the distance between the bottom position and top position of the flotation device.

In another embodiment of the device according to the invention the buoyancy device comprises a ridged housing with a inflatable body arranged to the ridged housing. By inflating the inflatable body with air the buoyancy can be varied, such that the vertical guide is kept at a desired level within the ocean.

The ridged housing comprises a plate perpendicular arranged to the vertical guide and a circumferential wall around the plate, under which the inflatable body is arranged. The plate provides a base for the inflatable body that controls the buoyancy and the depth of the static vertical guide.

Preferably, the circumferential wall extends both above as well as below the plate. This increase the efficiency of the sea anchor as water inside the circumferential wall and above or underneath the plate depending on direction of the forces increases the inertia of the vertical guide, keeping it at a steady depth.

Another preferred embodiment of the device according to the invention is were the buoyancy device comprises a flexible body to be filled with a liquid, e.g. water, and an inflatable body arranged inside of the flexible body. The flexible body provides a stable base due to its inertia and resistance in the water, when the vertical guide is urged up and down. The flexible body also provides for a protection layer for the inflatable body arranged in the flexible body. The inflatable body is provided to control the buoyancy of the device by adding or releasing air.

In yet another embodiment of the device according to the invention the flexible body comprises at least one flexible wall running from one side to the opposite side of the body. This flexible wall provides for stability of the shape of the body, such that the flexible body is not dented when a force is applied to the buoyancy device by the vertical guide.

In still another embodiment of the device according to the invention the vertical guide comprises at least one supply line running from the top of the vertical guide to the buoyancy control device for supplying a medium, e.g. air or water. With these supply lines air can be added or released from the buoyancy device at the surface of the ocean to control the buoyancy.

Preferably in the device according to the invention, the vertical guide comprises a hull were the spaces left are filled with foam, preferably biologically degradable foam like EPS. This provides for a light but strong device, which can be transported easily and can be manufactured for relative low costs.

It is furthermore preferred that the electrical terminals of the conversion device are arranged on the floatation device.

Still another embodiment of the device according to the invention comprises at least a second vertical guide arranged parallel to the first vertical guide, wherein the flotation device is also guided by the second vertical guide. By providing each additional guide with a conversion device around each guide, additional energy shall be extracted from the waves.

Preferably a fender is arranged around the floatation device to protect the flotation device. This fender can be manufactured of rubber or plastic and preferable filled highly compressible foam.

The invention also relates to a combination of a plurality of devices according to the invention and a plurality of buoys, wherein the devices and buoys are arranged in alternating rows and the buoys and the devices are connected to each other by electric cables to form a grid.

Such a grid of devices and buoys can for example be arranged between the windmills of an offshore windmill park. The windmills can be used for positional anchorage of the grid.

These and other features of the invention will be elucidated in conjunction with the accompanying drawings.
Figure 1 shows a perspective view with cut away portions of a first embodiment of a device according to the invention.
Figures 2A and 2B show a schematic view of the device according to figure 1 in two positions.
Figure 3 shows a buoyancy control device of a second embodiment of the invention.
Figure 4 shows an embodiment of a combination according to the invention.
Figure 5 shows the device according to figure 1 while being transported.
Figure 6 shows an anti-icing device for a device according to the invention.

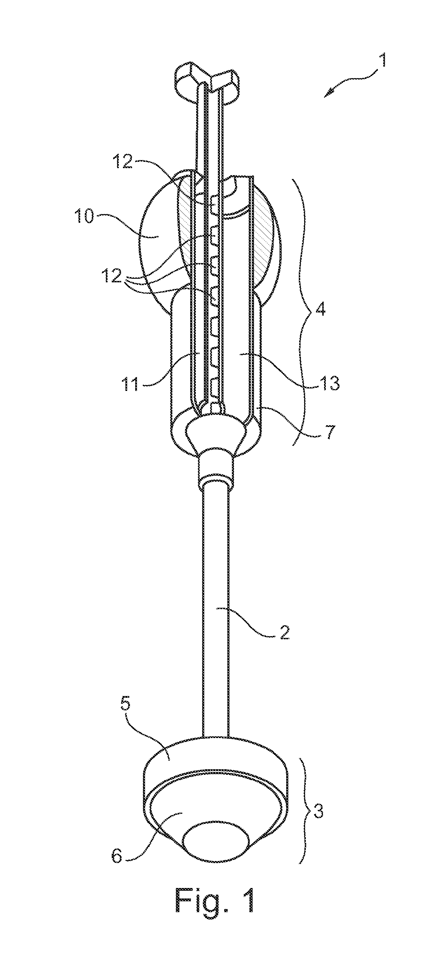

Figure 1 shows a perspective view of a device 1 according to the invention. The device 1 has a vertical guide 2, which is embodied as a tube. A buoyancy control device 3 is arranged at the bottom end of the vertical guide 2. Along the vertical guide 2 is furthermore a flotation device 4 arranged.

The buoyancy device 3 comprises a rigid housing of a plate and a circumferential wall 5 that will function as a sea anchor. At the bottom of the housing is an inflatable body 6. The inflatable body 6 is supplied with air via the supply lines arranged along the magnets in the vertical guide 2. By supplying air to or discharging air from the inflatable body 6 the buoyancy of the vertical guide 2 can be controlled, so the position of the vertical guide against the floating body can be calibrated.

The flotation device 4 comprises a hull 7 separated from the sea water by an inner tube (which is also part of coil tube of the linear generator) through which the vertical guide 2 extends. At the outside of the hull 7 a fender 10 is arranged. This fender 10 could be made from flexible (preferable) recycled materials filled with a suitable foam. The fender 10 protects the hull 7.

Within the hull 7 coils 11 are arranged. These coils 11 are closely surround the inner tube and so also the vertical guide 2. In the vertical guide 2 magnets 12 are arranged at the inner wall. When the coils 11 are moved relative along to the magnets 12 a current will be generated in coils 11.

The space 13 of the hull 7 can be filled with a foam, which fixates the coils 11 in the hull 7 and provides additional strength for the hull 7.

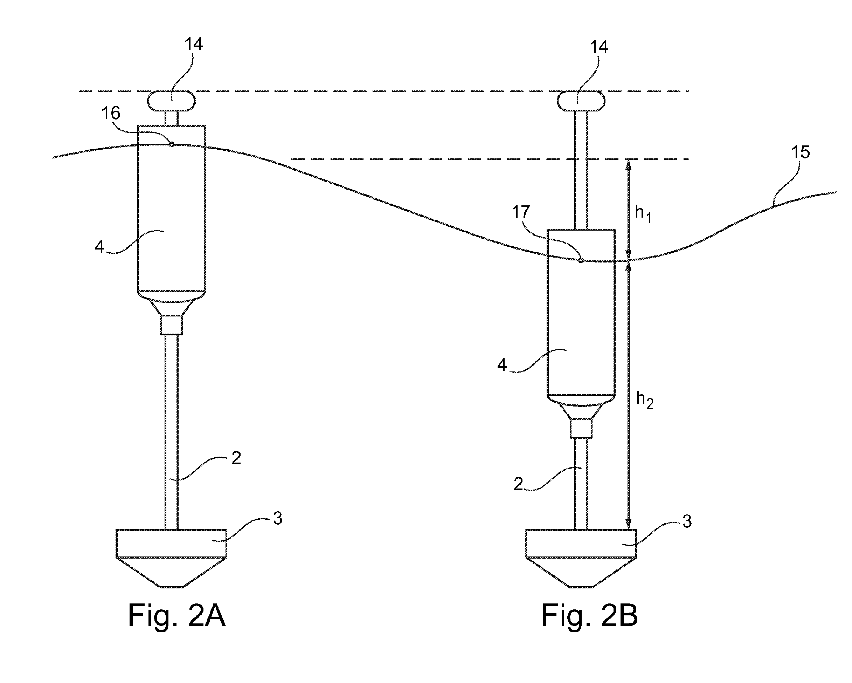

Figures 2A and 2B show the device 1 floating in the ocean. The buoyancy of the buoyancy control device 3 is controlled such, that the top 14 of the device 1 extends above the flotation device with its coils.

In figure 2A the device 1 is shown with the flotation device 4 in the top position as a result of the top 16 of a wave. In figure 2B the device 1 is shown with the flotation device 4 in the bottom position as a result of the low 17 of a wave.

As the buoyancy control device 3 controls the vertical guide 2 in a stationary position, the flotation device 4 can move up and down relative to the vertical guide 2 as a result of the out-of-phase heaving motions of the float by the wave 15 and the fully submerged inertial body. Due to this motion current is generated in the coils 11.

The height of the wave 15 is shown in figure 2B as h1. For optimal use of the materials vs. harvesting wave energy it is preferred that the distance between the bottom position of the flotation device 4 and the buoyancy device 3, i.e. h2, is at least two times h1, preferable three times. With these dimensions the influence of the wave 15 at the depth of the buoyancy device 3 is minimal, which ensures that the vertical guide 2 shall be maintained at a relative stationary position against the moving position of the flotation device at the surface of the water.

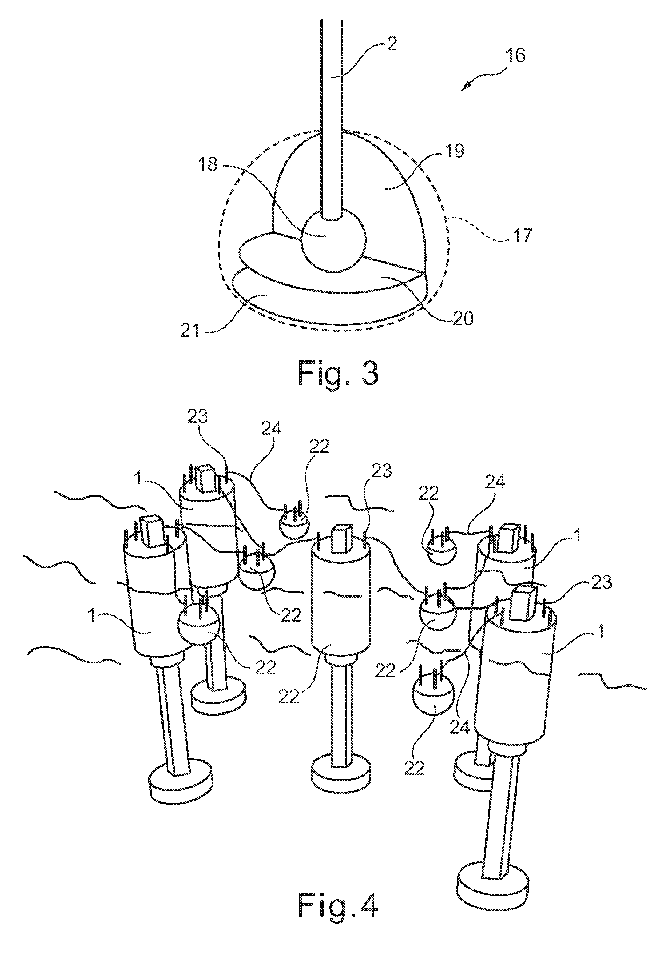

Figure 3 shows a second embodiment 16 of a buoyancy control device for a device according to the invention. This buoyancy control device 16 has a flexible body 17 and an inflatable body 18 arranged inside the body 17. The inflatable body 18 and flexible body 17 can both be provided with a medium via the supply lines in the hollow section of the vertical guide 2. Typically, the flexible body 17 is provided with water, while the inflatable body 18 is provided with air. The flexible body 17 protects the inner inflatable body 18. Note: during shipment the device will be filled with air, however a significant amount of ballast water is required for the stability of the complete system.

The buoyancy device 16 furthermore comprises some flexible walls 19, 20, 21 which assist in transferring the forces from the vertical guide to and maintaining the shape of the flexible body 17.

Figure 4 shows a grid of devices 1 according to the invention and a number of buoys 22. These buoys 22 provide intermediate connection hubs for the devices 1. Each device 1 is provided with terminals 23 for the electrical current generated by the coils and magnets. These terminals 23 of each device 1 are connected by cables 24 to the buoys 22.

As a result rows of devices 1 with in between rows of buoys 22 are created. The rows of buoys can be used alternating as a positive terminal or negative terminal to provide additional security from short circuiting.

The purpose of the connection hubs are
- to a minimize influence of the power and or umbilical cables on the flotation devices
- to guarantee the continuity incase one generator device in the grid is out of operation.
- the umbilical's with common power cables, control cables, monitoring cables, air supply etc runs under the transit hub buoys, instead of in the seabed.

- the last connection hub (end hub) between the generator grid and the connection to the distribution net or an existing (offshore) infrastructure (i.e. windmill parks), will also be the device which is connected to the artificial reef or existing structures to maintain the horizontal position of the grid.
- the end hub can be provided with control and monitoring connection so each individual power generator within the grid can be monitored and taken out of operation from this end hub.

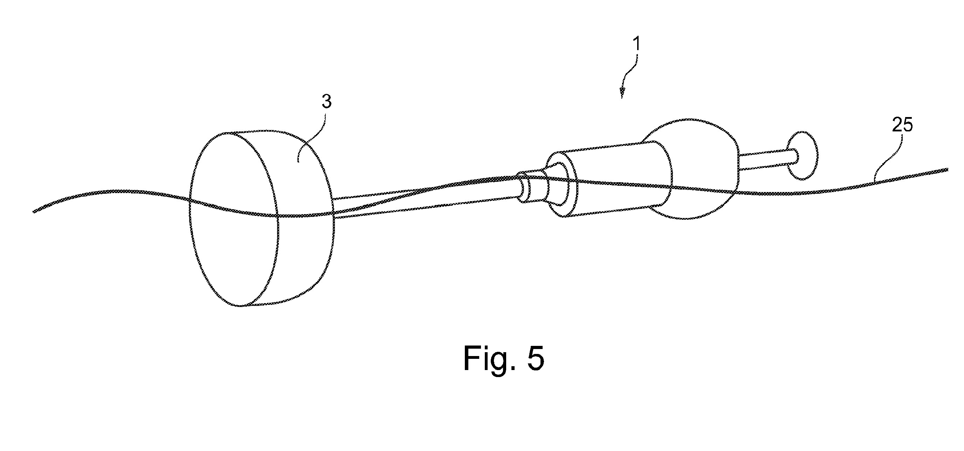

In figure 5 a device 1 is shown floating on the water surface 25. The device 1 is put in this position by adding additional air in the buoyancy control device 3 such that a positive buoyancy is achieved. In this floating position the device 1 can easily be towed to a location at sea for providing a grid as shown in figure 4.

The purposes of the buoyancy control device 3 are;
- For Shipment purposes, to inflate the buoyancy control device such that the total system comes to a horizontal position in the water, so it can be easily towed to position
- For maintenance purposes, to block the movement of the floatation device 4 relative to the vertical guide 2. This is achieved by controlling the buoyancy such, that the vertical guide 2 rises to such a level, that even at a wave top, the floatation device 4 is at its bottom position. In this way the power production can be stopped quickly without the need for any switches and so on.
- For emergency purposes, a quick relieve valve will be driven by a solenoid. In case of emergency the valve will be opened so the air will be pressed from the buoyancy control device by the static water pressure, the vertical guide with the magnets will come and stay in the lowest position due to the gravity (the floatation device is in the highest position).

The invention can be enhanced if required with an Anti icing device, to protect the top of the system including the space between the vertical guide and the coil tube against freezing. This device will be applicable for installations placed in an area with risk on icing.

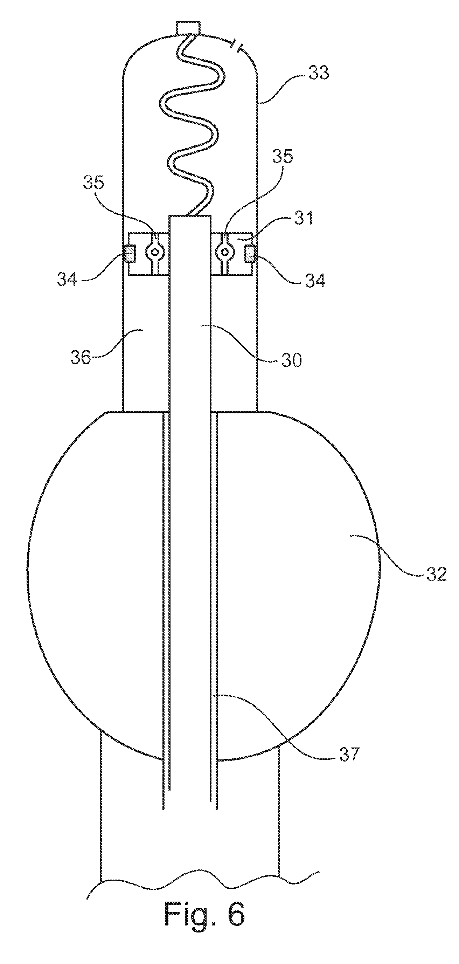

An embodiment of an anti-icing device is shown in figure 6. A piston 31 is arranged at the top of a vertical guide 30. At the top of the flotation device 32, which is guided by the vertical guide 30, a housing 33 is arranged. The piston 31 can move up and down in the housing 33 and the piston 31 is sealed relative to the inner wall of the housing 33 by the seals 34.

In the piston 31 one-way valves 35 are arranged. These one-way valves 35 are closed when the piston 31 moves down in the housing and are open when the piston 31 moves up in the housing 33.

When the piston 31 moves down in the housing 33, the air present in the space 36 is forced through the channel 37 between the vertical guide 30 and the flotation device 32. As a result any dirt or ice is blown out of the channel 37.

Due to the movement of the piston 31 in the housing 33, air is compressed, resulting in heating up of the air, which is beneficial in reducing icing within the device according to the invention.

The invention can be enhanced if required with a desalination device at the bottom end of the coil tube to prevent marine growth and salt crystals between the guide and the coil tube.

## Claims

1. Device for converting wave energy into electrical energy, the device comprising:
- a vertical guide;
- a flotation device movable along the vertical guide between a top position and a bottom position;
- a buoyancy control device arranged at the bottom end of the vertical guide for maintaining a constant depth of the bottom end of the guide relative to the average sea level; and
- a conversion device for converting the movement of the floatation device along vertical guide into electrical energy.

2. Device according to claim 1, wherein the conversion device is a linear generator.

3. Device according to claim 2, wherein the linear generator comprises magnets arranged in the vertical guide and electrical coils arranged in the flotation device.

4. Device according to any of the preceding claims, wherein the distance between the bottom position of the flotation device and the buoyancy control device will be at least two times, preferably three times, the wave height or the distance between the bottom position and top position of the flotation device.

5. Device according to any of the preceding claims, wherein the buoyancy device comprises a ridged housing (sea anchor) with an inflatable body arranged to the ridged housing.

6. Device according to claim 5, wherein the ridged housing (sea anchor) comprises a plate perpendicular arranged to the vertical guide wherein the inflatable body is arranged within the circumferential wall.

7. Device according to any of the claims 1 - 4, wherein the buoyancy device comprises a flexible body to be filled with a liquid, e.g. water, and an inflatable body arranged inside of the flexible body.

8. Device according to one of the claims 5 - 7, wherein the vertical guide comprises at least one supply line running from the top of the vertical guide to the buoyancy control device for supplying a air or water.

9. Device according to any of the preceding claims wherein the vertical guide comprises a hull were the remaining spaces can be filled with foam, preferably biologically degradable foam.

10. Device according to any of the preceding claims, wherein the electrical terminals of the conversion device are arranged on the floatation device.

11. Device according to any of the preceding claims, comprising at least a second vertical guide arranged parallel to the first vertical guide, wherein the flotation device is also guided by the second vertical guide. By providing each additional guide with electric power conversion devices around each guide, additional energy shall be extracted from the waves.

12. Device according to any of the preceding claims, wherein a fender is arranged around the floatation device.

13. Combination of a plurality of devices according to any of the preceding claims and a plurality of buoys, wherein the devices and buoys are arranged in alternating rows and the buoys and the devices are connected to each other by electric cables to form a grid.

14. Combination according to claim 13, comprising an artificial reefs to provide positional anchoring of the combination.
